# EUROPEAN PATENT SPECIFICATION

(11) **EP 1 448 000 B1**
(45) Date of publication and mention of the grant of the patent: **04.04.2012**
(21) Application number: 04100393.0
(22) Date of filing: 04.02.2004
(51) Int. Cl.: H04W 12/06, H04W 76/04, H04L 12/28

(54) **Method and system for authenticating a subscriber**
Verfahren und System zur Authentisierung eines Teilnehmers
Procédé et système permettant d'authentifier un abonné

(30) Priority: 05.02.2003 FI 20030179
(43) Date of publication of application: 18.08.2004
(73) Proprietor: TeliaSonera AB, 10663 Stockholm (SE)
(72) Inventor: Ala-Luukko, Sami, 00200, Helsinki (FI); Väänänen, Kai, 02940, Espoo (FI)
(74) Representative: Äkräs, Tapio Juhani

(56) References cited:
- EP-A- 0 912 027
- WO-A-02/41587
- US-B1- 6 201 962
- US-B1- 6 473 413
- HAVERINEN H ET AL: "CELLULAR ACCESS CONTROL AND CHARGING FOR MOBILE OPERATOR WIRELESS LOCAL AREA NETWORKS" IEEE WIRELESS COMMUNICATIONS, IEEE SERVICE CENTER, PISCATAWAY, NJ, US, vol. 9, no. 6, December 2002 (2002-12), pages 52-60, XP001143468 ISSN: 1070-9916
- ALA-LAURILA J ET AL: "WIRELESS LAN ACCESS NETWORK ARCHITECTURE FOR MOBILE OPERATORS" IEEE COMMUNICATIONS MAGAZINE, IEEE SERVICE CENTER. PISCATAWAY, N.J, US, vol. 39, no. 11, November 2001 (2001-11), pages 82-89, XP001107810 ISSN: 0163-6804

## Description

### FIELD OF THE INVENTION

The invention relates to maintaining a session between a visited network and a home network when a user is re-authenticated, particularly in a telecommunications system where the subscriber is authenticated to the home network via the base station of a local area network and the visited network.

### BACKGROUND OF THE INVENTION

WO-A-02/41587 discloses a wireless local area network (wlan) that includes mobile devices that are allowed to transfer wireless connections between wlan subnets or channels having different access points. The access points connect to a central controller or roaming server that supports seamless hand-offs of mobile devices from one access point to another access point. The roaming server supports the reassignments of session data parameters from one access point to another (e.g., access point address spoofing) so that the mobile device can use the same parameters for communicating to a new access point.
Today, wireless communication is increasingly used in telecommunications. In addition to mobile networks, such as networks based on the GSM system, wireless local area networks (WLAN) are used. One development trend is to combine wireless local area networks and mobile networks in such a way that a mobile network can be utilized via a wireless local area network. The wireless local area networks according to the IEEE 802.11 standard, for example, can utilize authentication, verification and accounting services of a GSM network via a network node that includes what is known as access control (AC). The access control authenticates the subscriber, decides on whether the subscriber will have access to the network, and if he will, maintains information on the subscriber connection and the subscriber. Also, the access control enables the subscriber of a GSM network to utilize a WLAN network as the access network. In the above-described solution, the terminal of the subscriber of the GSM network establishes a connection to the GSM network or the Internet via a base station that is called the access point (AP) of the WLAN network. The base station is connected via a network, e.g. Ethernet network or IP subnetwork, to the access control AC, which, in turn, is connected to the home network of the GSM system of the subscriber and its different network nodes, such as the authentication server. When the subscriber moves within the area of the WLAN network in such a way that the access point AP of the network changes, the access control AC remains the same and the subscriber remains known in the visited network.

Mobile communication systems are moving over to what are called third-generation mobile communication systems, such as the UMTS (Universal Mobile Telecommunications System) standardized by the 3GPP (Third Generation Partnership Project). In order for these new systems to be able to utilize a WLAN network as the access network, also standards of wireless local area networks are being developed, including for instance the standard series IEEE 802.1X (X denoting any number, letter or a combination of a letter and a number). At present, it seems that the access control AC will be integrated into a common network node, i.e. base station, with the access point AP. The base station, in turn, communicates with the home network of the 3GPP system of the 3GPP user equipment via the visited network when the subscriber is not within the service area of his home network. When the subscriber is moving in the area of the WLAN network in such a way that the access point AP of the network changes, also the access control changes. The subscriber is new to the new access point and access control, and therefore the subscriber must be authenticated. In connection with previous authentication, a session for collecting accounting information, for instance, has been established between the visited network and the home network. The visited network cannot associate the subscriber to be re-authenticated by the new access control with a particular session, because the information is in the old base station and the subscriber is authenticated to the home network for information security reasons. The subscriber being interpreted as a new subscriber in the visited network causes a new session to be established between the visited network and the home network, the old session being terminated. This makes the accounting, for instance, more difficult and increases the load of the visited network, because when the subscriber is moving in the area of the visited network, a new connection with related information is created and the existing session is terminated.

### BRIEF DESCRIPTION OF THE INVENTION

An object of the invention is to provide a method and an apparatus implementing the method in such a way that the above-mentioned problem can be solved. The object of the invention is achieved with a method and a system that are characterized by what is stated in the independent claims. Preferred embodiments of the invention are described in the dependent claims.

The invention is based on detecting the problem and solving it in such a way that at least in connection with re-authentication the visited network is provided with information with which it recognizes an existing connection.

An advantage of the method and the system according to the invention is that the visited network does not unnecessarily set up a new session between the visited network and the home network of the subscriber when the subscriber is moving between different base stations of the visited network, but it utilizes an existing session instead. Thus, different mechanisms and allocation of accounting information, for example, are made easier.

### BRIEF DESCRIPTION OF THE FIGURES

The invention will now be described in greater detail in connection with preferred embodiments, referring to the attached drawings, of which
Figure 1 is a simplified block diagram of the architecture of an exemplary system;
Figure 2 shows signalling according to a first preferred embodiment of the invention; and
Figure 3 shows signalling according to a second preferred embodiment of the invention.

### DETAILED DESCRIPTION OF THE INVENTION

The present invention can be used in any telecommunications system where the subscriber of a network according to a system of a second type can use the services of his network via the base station of a system of a first type also when he is roaming. In such systems, a wireless local area network may be connected to a wide area network, such as a public switched telephone network. The wireless local area network may be, for instance, an IEEE 802.1X or a HIPERLAN type network that uses either a radio interface, such as Bluetooth, or infrared or the like wireless access technique as the data bearer of the air interface. The wide area network may be based on, for instance, what are called third-generation mobile communication systems, e.g. UMTS, and systems based on them, on the GSM system and mobile communication systems corresponding to it, e.g. GSM 1800 and PCS (Personal Communication System), as well as systems based on the above systems, e.g. GSM 2+ systems. The invention can be applied to systems utilizing also other wireless systems or fixed systems, or to systems where one of the systems is based on a fixed system and the other on a wireless system.

In the following, the invention is described by using an exemplary system based on a combination of the 3GPP All-IP system and the WLAN system, without restricting the invention to it. 3GPP All-IP is a system based on the IP technology and defined in the third-generation cooperation project 3GPP. The specifications of telecommunications systems and particularly wireless telecommunications systems are developing rapidly. Due to such development, additional changes may be required for the invention. Therefore, all words and expressions should be interpreted broadly, and they are intended to describe and not to restrict the invention. In which network node a function is located is not relevant to the invention; what is relevant is the function itself.

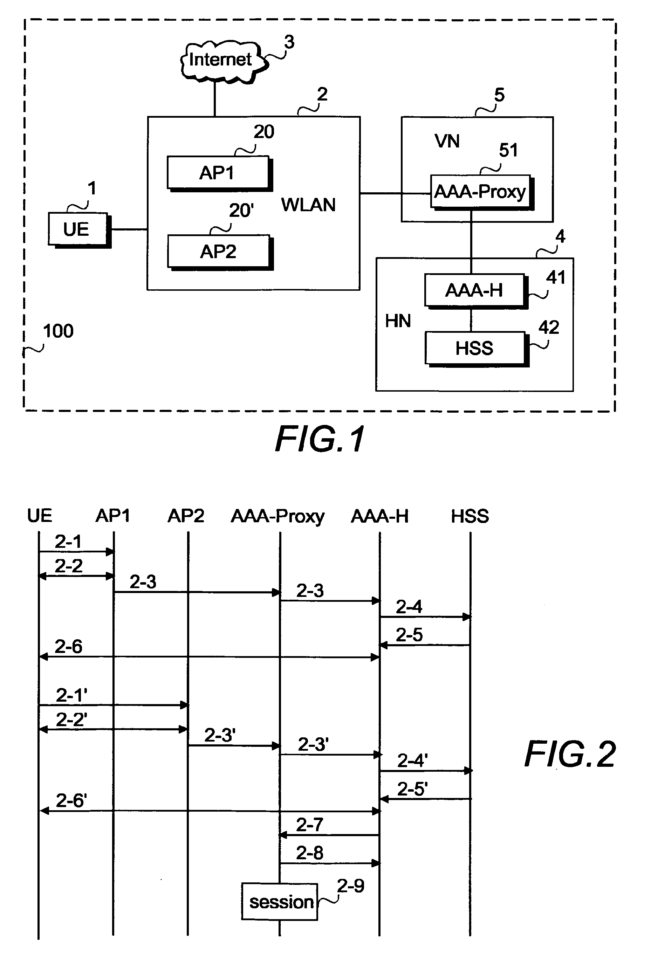

Figure 1 shows simplified network architecture, indicating only a part of the elements of the system architecture. The network nodes shown in Figure 1 are logical units whose implementation may deviate from what is shown. It will be obvious to a person skilled in the art that the system may also comprise other functions and structures, which need not be described in more detail here.

In the example of Figure 1, a system 100 comprises user equipment UE 1, a local area network WLAN 2, via which the user equipment can communicate with an IP-protocol-based network 3, such as the Internet or an intranet, as well as a wide area network that comprises the home network HN 4 of the user equipment and a visited network VN 5.

The user equipment UE 1 refers here generally to an entity formed by the subscriber and the actual terminal equipment. The terminal equipment may be any terminal that is capable of communicating in a mobile communication system, or a combination of several devices arranged to function in both a local area network WLAN and a wide area network. The terminal equipment may be, for instance, a portable computer or a mobile phone. In the example of Figure 1, the user equipment UE 1 comprises a WLAN adapter card or corresponding functionality for a local area network, and a subscriber identification card, such as SIM (Subscriber Identity Module) of the GSM system, or the like information for a wide area network. Typically, the subscriber identification card is a smart card connected detachably to the user equipment, comprising for instance information relating to subscriber authentication, such as the number specifying the subscriber, i.e. IMSI (International Mobile Subscriber Identity). Information on the identification card is also used for authenticating the subscriber with the home area network and for encrypting radio traffic. Typically, different temporary identifiers can be stored in the identification card, including the temporary identifier TMSI (Temporary Mobile Subscriber Identity) of the location area, with which transfer of the IMSI over the radio path can be avoided.

The wireless local area network WLAN 2 comprises base stations AP1 20, AP2 20', there being network access control AC integrated into each of the base stations. The user equipment UE 1 can move freely from one base station to another. When the user equipment moves from the source base station to the target base station, the target base station checks whether the user has a right to access the network. At the same time, the target base station triggers new user equipment authentication to the home network.

The home network HN 4 is part of a wide area network system. The home network HN 4 comprises a network node AAA-H 41 that authenticates the subscriber (i.e. user equipment 1) and corresponds to the authentication centre AuC of the GSM system. AAA-H 41 is a server participating in authentication, authorization and accounting management in the home network. Authentication confirms the identity of the subscriber (user equipment UE 1) before a right to access the network is granted. The subscriber is authenticated by using for instance the AKA (Authentication and Key Agreement) protocol between the user equipment and AAA-H. Authorization, in turn, defines which network resources and services the user equipment UE is allowed to use. Authorization is typically carried out in connection with the authentication. Accounting involves following up and collecting information on how the user equipment UE 1 uses network resources.

The home network HN 4 also comprises a home subscriber server HSS 42. HSS 42 corresponds to the home location register HLR of the GSM system. Subscriber information is stored in the HSS 42 permanently or semi-permanently for each subscriber in such a way that the subscriber information is connected to the subscriber identifier IMSI or a corresponding identifier specifying the subscriber. Subscriber information includes for instance the telephone number or telephone numbers MSISDN, routing information, i.e. the current location of the subscriber, information on the services to which the subscriber has access, and different more permanent or temporary identifiers and other information. HSS 42 contains for instance information required for subscriber authentication, such as authentication vectors.

The visited network VN 5 is also part of a wide area network. The visited network VN 5 comprises for the authentication of the subscriber (user equipment 1) a network node AAA-Proxy, via which messages are transmitted to AAA-H. AAA-Proxy does not participate in the actual authentication between the user equipment and AAA-H, but it participates in collecting accounting information. After successful authentication of the user equipment UE 1, a session is established between AAA-Proxy and AAA-H. AAA-Proxy may also receive from AAA-H subscriber information needed for accounting, for example, which AAA-H may have searched in the home location register HSS.

Figure 2 shows signalling according to a first preferred embodiment of the invention. For example, the user equipment UE is switched on in the area of the base station AP1 of the local area network, and it informs with a message 2-1 that it wishes to register. The local area network, i.e. the base station AP1, checks whether the user equipment has a right to access the local area network, for example by requesting the user identifier from the user with a message 2-2. Alternatively, the registering request may contain the information required for checking the access.

If the user equipment has a right to access the local area network, as assumed in the example of Figure 2, the registering process is continued by transmitting a registering request in a message 2-3 from AP1 via AAA-Proxy of the visited network to AAA-H of the home network. AAA-H separates from the registering request the information used for identifying the subscriber, such as NAI (Network Access Identifier), TMSI, MSISDN or IMSI. A temporary identifier is usually used for identifying the subscriber. Having identified the subscriber, AAA-H requests information required for authenticating the subscriber in question from the home subscriber server in a message 2-4. In the first preferred embodiment of the invention, information on whether the subscriber has already registered for the visited network is maintained in the home location register. In other words, information on whether a session has been established between AAA-H and AAA-Proxy is maintained in the HSS. Hereafter, this information is referred to as 'session information'.

AAA-H receives in a message 2-5 not only the information required for authentication but also the session information, i.e. the information on whether a session already exists. The information may be a session number, for instance, and if the number is missing (or the number is 0), it means that there is no session. If there is no session, as is the case in the example of Figure 2 at this stage, authentication between the terminal and the home network are carried out with messages 2-6. The authentication may be, for example, EAP/SIM authentication, which utilizes Radius and Diameter protocols. EAP (Extensible Authentication Protocol) enables the use of different authentication methods. In other words, it provides a standard mechanism for authentication method-independently. As a result of the authentication, a session is established between AAA-Proxy and AAA-H, and in response to the creation of the session the session information is updated in the HSS to indicate that a session exists. Alternatively, the session information is maintained in AAA-H, in which case it does not have to be separately requested in situations where the information required for authentication is in AAA-H. If the session information is maintained in AAA-H but the authentication information or part of it is requested from HSS, the message 2-5 does not contain the session information. How the session is established is not relevant to the invention, and the session can be established by means of prior art, for example.

When the terminal equipment UE moves from the base station AP1 to the base station AP2, it transmits a registering request 2-1' to the base station AP2, which checks (messages 2-2'), according to what has been described above, whether the terminal equipment UE is allowed access to the network and forwards in the example of Figure 2 the registering request to AAA-H in a message 2-3'. AAA-H identifies the subscriber, requests information from HSS in a message 2-4', as described above, and receives the information required for the authentication as well as the session information in a message 2-5'.

Now the session information indicates that a session exists. Therefore, after successful authentication (messages 2-6'), AAA-H according to the first preferred embodiment of the invention transmits information to AAA-Proxy in a message 2-7 on the authentication being associated with an existing session. The session is identified in the message 2-7 by means of a session number, for instance. AAA-Proxy acknowledges the information with a message 2-8 and maintains (point 2-9) the session and its information to use it for generating accounting information transmitted from UE via AP2, for example. The authentication method and protocols used are not relevant to the invention. The first authentication (messages 2-6) of the above-described example may be different from the second authentication (messages 2-6'). For instance EAP/SIM enables full authentication and lightened authentication that is called re-authentication.

An advantage of the first preferred embodiment of the invention is that the authentication remains transparent to AAA-Proxy.

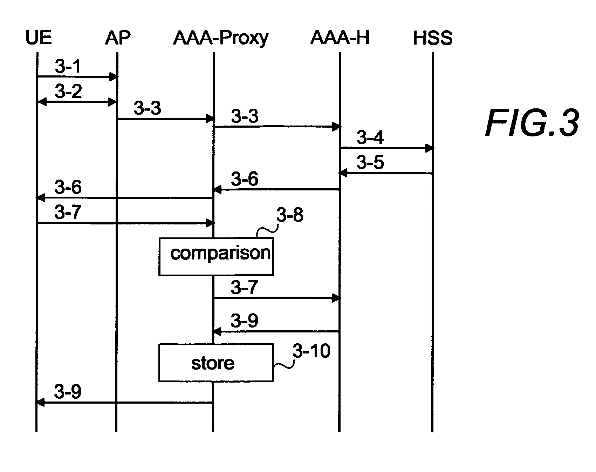

Figure 3 shows signalling according to a second preferred embodiment of the invention. For example, the user equipment UE is switched on in the area of the base station AP of the local area network, or it moves from another base station of the local area network to the area of the base station AP. Thus, the user equipment informs with a message 3-1 that it wishes to register. The local area network, i.e. base station AP, checks whether the user equipment has a right to access the local area network, for instance by requesting the user identifier from the user with messages 3-2. Alternatively, the registering request can contain the information required for checking the access.

If the user equipment has a right to access the local area network, as assumed in the example of Figure 3, the registering process is continued by transmitting a registering request in a message 3-3 from AP via AAA-Proxy of the visited network to AAA-H of the home network. AAA-H separates from the registering request the information used for identifying the subscriber, such as NAI, TMSI, MSISDN, IMSI, and requests the information required for authenticating the subscriber from the home subscriber server HSS in a message 3-4. AAA-H receives the information required for authentication in a message 3-5.

After that, the authentication between the terminal and the home network is carried out for example as EAP/SIM authentication, utilizing Radius and Diameter protocols. AAA-H transmits the authentication request in a message 3-6 to the user equipment UE via AAA-Proxy. The user equipment responds by transmitting to AAA-H a message 3-7 that contains the temporary identifier of the user equipment. In the second preferred embodiment of the invention, AAA-Proxy separates the temporary identifier of the message 3-7 and compares it with the temporary identifiers in its memory at point 3-8. If AAA-Proxy finds the identifier of the message in its memory, it recognizes that the authentication is associated with an existing session and maintains the session and its information to use it for generating accounting information of data transmitted from UE via AP, for instance. After checking the identifier, AAA-Proxy forwards the message 3-7 and its identifier to AAA-H. AAA-H carries out functions required for the authentication and transmits an acknowledgement of successful authentication via AAA-Proxy to the UE in a message 3-9. When receiving the message 3-9, AAA-Proxy knows whether it is associated with the authentication of an existing session. If it is, AAA-Proxy merely transmits the message 3-9 to the user equipment UE.

The message 3-9 may contain a new temporary identifier for the user, as assumed in the example of Figure 3. If the message 3-9 has a temporary identifier, AAA-Proxy saves in its memory the identifier of the message 3-9 as the identifier of this session at point 3-10, before transmitting the message 3-9 forwards. Correspondingly, having received the message 3-9, the user equipment UE stores the identifier of the message 3-9 as the temporary identifier to be used.

If the message 3-9 is not associated with the authentication of an existing session, a new session is established between AAA-Proxy and AAA-H. At least during the first authentication AAA-H adds to the message 3-9 an identifier, preferably a temporary identifier it has generated, in the second preferred embodiment of the invention. Therefore, in addition to creating a session, AAA-Proxy further stores in its memory the identifier of the message 3-9 for this session. Subsequently, AAA-Proxy transmits the message 3-9 and its temporary identifier to the user equipment UE.

The authentication method and protocols used are not relevant to the invention. The session may have been created by using a method and a protocol different from the ones used in the authentication during which no new session is created but an existing session is utilized.

An advantage of the second preferred embodiment of the invention is that the signalling needs not be changed. The only thing that must be modified is how AAA-Proxy utilizes the information transmitted in the authentication signalling (e.g. Radius/Diameter signalling).

In a third preferred embodiment of the invention, AAA-Proxy generates a temporary roaming identifier for the subscriber, which identifier is transmitted over the air interface to the user equipment for example in connection with the confirmation of the authentication (e.g. message 3-9 of Figure 3). Both AAA-Proxy and the user equipment store the temporary roaming identifier in its memory. In this embodiment, the user equipment adds the roaming identifier either to the registering message (e.g. message 3-1 of Figure 3) or to another predetermined authentication message (e.g. message 3-7 of Figure 3). AAA-Proxy separates the roaming identifier from the message and compares it with the identifiers in its memory at point 3-8. If the received identifier is found in the memory, AAA-Proxy knows to which session or subscriber the authentication and registering are associated and maintains the existing session. If an authentication message is concerned, AAA-Proxy preferably deletes the roaming identifier from the message before transmitting it to AAA-H. If there is no identifier in the message or the identifier is not found in the memory, AAA-Proxy knows that a new connection / new user equipment is concerned, for which a session must be established and an identifier generated. The roaming identifier can be updated in connection with each registering/authentication.

Instead of an additional roaming identifier, a session number can be used.

The messages described above in connection with Figures 2 and 3 are only suggestive and may contain several separate messages to transmit the same information. Further, the messages may contain other information as well. Messages can also be combined freely, and part of the messages, such as the messages 2-2, 2-2', 2-4, 2-4', 2-5, 2-5' asking for further information can be omitted. Part of the messages can also be transmitted simultaneously or in a different order than what is shown in Figures 2 and 3. Part of the above-described functions and points can also be carried out at the same time as messages are transmitted, or in a different order than what is described above. Depending on the operators and systems, also other network nodes, to which different functionalities have been distributed, can participate in signalling and transmitting information.

For the sake of clarity, only memory of network nodes has been dealt with above. It will be obvious to a person skilled in the art that the memory may be either the network node's own memory or a separate database which the network node is arranged to use. Instead of one database, the network node may use several separate databases.

Although the invention is described above assuming that the base station changes in the re-authentication, it will be obvious to a person skilled in the art that the invention can be applied also to such cases where the re-authentication takes place via the same base station as the preceding authentication. What triggers the re-authentication is not relevant to the invention.

The telecommunications system implementing the functionality according to the present invention, the network node(s) and the user equipment each comprise not only means required for implementing prior art authentication but also means for recognizing an existing session in a visited network in connection with re-authentication in such a way that an existing session is used and no new session is created. More specifically, they comprise means for implementing at least one above-described embodiment. Present network nodes and user equipment comprise processors and memory that can be utilized in functions according to the invention. All modifications and configurations required for implementing the invention can be carried out as added or updated software routines and/or application-specific integrated circuits (ASIC). In AAA-Proxy according to the second or third preferred embodiment of the invention as well as in the user equipment of the third preferred embodiment of the invention, also additional memory may be needed.

It will be obvious to a person skilled in the art that with the advance of technology the basic idea of the invention can be implemented in a plurality of ways. Thus, the invention and its embodiments are not restricted to the above examples but can vary within the scope of the claims.

## Claims

1. A method for maintaining a session between a home network and a visited network in a system where user equipment is authenticated to the home network via the visited network and the local area network base station serving the user equipment in such a way that the authentication is transparent to the visited network, and where a session is established between the visited network and the home network in response to successful authentication, **characterized by**
transmitting (2-7, 3-7) to the visited network information by means of which the visited network can recognize whether the authentication is associated with an existing session;
maintaining (2-9, 3-8) the existing session if the authentication is associated with an existing session; and
establishing a new session only if the authentication is not associated with an existing session.

2. A method according to claim 1, **characterized by** further
maintaining in the home network information on whether the authentication is associated with an existing session; and
if the authentication is associated with an existing session, transmitting (2-7) information on this from the home network to the visited network in connection with the authentication.

3. A method according to claim **1, characterized by** further
storing an identifier in the visited network and in the user equipment in connection with first authentication;
transmitting (3-7) the identifier from the user equipment to the visited network during the following authentication;
comparing (3-8) the identifier received in the visited network with the identifiers stored in the visited network; and
recognizing the authentication to be authentication associated with an existing session if the received identifier is found among the stored identifiers.

4. A telecommunications system comprising
base stations (20, 20') based on a first system;
a visited network (5) and a home network (4) based on a second system;
user equipment (1) that can communicate with the home network via the base station serving it and the visited network;
in which system the user equipment (1) is authenticated transparently to the home network (4) via the visited network (5), and in response to successful authentication, a session is established between the visited network and the home network,
**characterized in that**
the visited network (5) is arranged to receive information by means of which the visited network can recognize whether the authentication is associated with an existing session, to recognize, by means of the received information, the user equipment (1) to be re-authenticated and to use an existing session between the visited network and the home network for the user equipment to be re-authenticated.

5. A telecommunications system according to claim 4, **characterized in that**
the first system is a WLAN system whose base stations (20, 20') also comprise access control; and
the second system is a mobile communication system.

6. A telecommunications system according to claim 4 or 5,
**characterized in that**
in connection with the re-authentication, the home network (4) is arranged to transmit to the visited network (5) information that a session has already been established between the visited network and the home network for the user equipment (1) associated with the authentication; and
the visited network (5) is arranged to recognize the user equipment (1) to be re-authenticated in response to the information transmitted by the home network.

7. A telecommunications system according to claim 4 or 5, **characterized in that** during the authentication of the user equipment (1), the visited network (5) is arranged to store the temporary identifier transmitted from the home network (4) to the user equipment (1) in its memory, to compare the temporary identifier transmitted by the user equipment to the home network with the identifiers in the memory, and to recognize the user equipment to be user equipment to be re-authenticated if the temporary identifier transmitted by the user equipment is in the memory.

8. A telecommunications system according to claim 7, **characterized in that** the system (100) uses the Radius and Diameter protocols in the authentication, and the identifier is a temporary identifier to be transmitted in messages according to the Radius and Diameter protocols.

## Patentansprüche

1. Verfahren zum Aufrechterhalten einer Sitzung zwischen einem Heimatnetzwerk und einem besuchten Netzwerk in einem System, in dem eine Benutzereinrichtung gegenüber dem Heimatnetzwerk über das besuchte Netzwerk und die Basisstation des lokalen Bereichsnetzwerks, die die Benutzereinrichtung bedient, derart authentifiziert wird, dass die Authentifizierung gegenüber dem besuchten Netzwerk transparent ist, und in dem eine Sitzung zwischen dem besuchten Netzwerk und dem Heimatnetzwerk in Antwort auf eine erfolgreiche Authentifizierung hin aufgebaut wird,
**gekennzeichnet durch**
Übertragen (2-7, 3-7), zu dem besuchten Netzwerk, von Informationen, mittels derer das besuchte Netzwerk erkennen kann, ob die Authentifizierung mit einer existierenden Sitzung assoziiert ist;
Aufrechterhalten (2-9, 3-8) der existierenden Sitzung, falls die Authentifizierung mit einer existierenden Sitzung assoziiert ist; und
Aufbauen einer neuen Sitzung lediglich dann, wenn die Authentifizierung nicht mit einer existierenden Sitzung assoziiert ist.

2. Verfahren gemäß Anspruch 1, weiterhin **gekennzeichnet durch**
Pflegen, in dem Heimatnetzwerk, von Informationen darüber, ob die Authentifizierung mit einer existierenden Sitzung assoziiert ist; und
falls die Authentifizierung mit einer existierenden Sitzung assoziiert ist, Übertragen (2-7) von Informationen diesbezüglich von dem Heimatnetzwerk zu dem besuchten Netzwerk in Verbindung mit der Authentifizierung.

3. Verfahren gemäß Anspruch 1, weiterhin **gekennzeichnet durch**
Speichern einer Kennung in dem besuchten Netzwerk und in der Benutzereinrichtung in Verbindung mit einer ersten Authentifizierung;
Übertragen (3-7) der Kennung von der Benutzereinrichtung zu dem besuchten Netzwerk während der nachfolgenden Authentifizierung;
Vergleichen (3-8) der in dem besuchten Netzwerk empfangenen Kennung mit den in dem besuchten Netzwerk gespeicherten Kennungen; und
Erkennen der Authentifizierung als mit einer existierenden Sitzung assoziiert, falls die empfangene Kennung unter den gespeicherten Kennungen gefunden wird.

4. Telekommunikationssystem, umfassend
Basisstationen (20, 20') auf der Grundlage eines ersten Systems;
ein besuchtes Netzwerk (5) und ein Heimatnetzwerk (4) auf der Grundlage eines zweiten Systems;
eine Benutzereinrichtung (1), die mit dem Heimatnetzwerk über die sie bedienende Basisstation und das besuchte Netzwerk kommunizieren kann;
wobei in dem System die Benutzereinrichtung (1) über das besuchte Netzwerk (5) gegenüber dem Heimatnetzwerk (4) transparent authentifiziert wird und in Antwort auf eine erfolgreiche Authentifizierung hin eine Sitzung zwischen dem besuchten Netzwerk und dem Heimatnetzwerk aufgebaut wird,
**dadurch gekennzeichnet, dass**
das besuchte Netzwerk (5) eingerichtet ist, um Informationen zu empfangen, mittels derer das besuchte Netzwerk erkennen kann, ob die Authentifizierung mit einer existierenden Sitzung assoziiert ist, um die neu zu authentifizierende Benutzereinrichtung (1) mittels der empfangenen Informationen zu erkennen und um eine existierende Sitzung zwischen dem besuchten Netzwerk und dem Heimatnetzwerk für die neu zu authentifizierende Benutzereinrichtung zu verwenden.

5. Telekommunikationssystem gemäß Anspruch 4, **dadurch gekennzeichnet, dass**
das erste System ein WLAN-System ist, dessen Basisstationen (20, 20') ebenso eine Zugangskontrolle umfassen; und
das zweite System ein Mobilkommunikationssystem ist.

6. Telekommunikationssystem gemäß Anspruch 4 oder 5,
**dadurch gekennzeichnet, dass**
in Verbindung mit der Neuauthentifizierung das Heimatnetzwerk (4) eingerichtet ist, um zu dem besuchten Netzwerk (5) Informationen zu übertragen, dass bereits eine Sitzung zwischen dem besuchten Netzwerk und dem Heimatnetzwerk für die mit der Authentifizierung assoziierte Benutzereinrichtung (1) aufgebaut wurde; und
das besuchte Netzwerk (5) eingerichtet ist, um die neu zu authentifizierende Benutzereinrichtung (1) in Antwort auf die von dem Heimatnetzwerk übertragenen Informationen hin zu erkennen.

7. Telekommunikationssystem gemäß Anspruch 4 oder 5, **dadurch gekennzeichnet, dass** während der Authentifizierung der Benutzereinrichtung (1) das besuchte Netzwerk (5) eingerichtet ist, um die von dem Heimatnetzwerk (4) zu der Benutzereinrichtung (1) übertragene Kennung in seinem Speicher zu speichern, um die durch die Benutzereinrichtung zu dem Heimatnetzwerk übertragene temporäre Kennung mit den Kennungen in dem Speicher zu vergleichen, und um die Benutzereinrichtung als eine neu zu authentifizierende Benutzereinrichtung zu erkennen, falls sich die durch die Benutzereinrichtung übertragene temporäre Kennung in dem Speicher befindet.

8. Telekommunikationssystem gemäß Anspruch 7, **dadurch gekennzeichnet, dass** das System (100) die Radius- und Diameter-Protokolle bei der Authentifizierung verwendet und die Kennung eine temporäre Kennung ist, die in Nachrichten gemäß den Radius- und Diameter-Protokollen zu übertragen ist.

## Revendications

1. Un procédé pour maintenir une session entre un réseau domestique et un réseau visité dans un système dans lequel l'équipement utilisateur est authentifié sur le réseau domestique via le réseau visité et sur la station de base du réseau local desservant l'équipement utilisateur de telle sorte que l'authentification est transparente sur le réseau visité, et dans lequel une session est établie entre le réseau visité et le réseau domestique en réponse à une authentification réussie, **caractérisé par**
le fait de transmettre (2-7, 3-7) de l'information sur le réseau visité, au moyen de laquelle le réseau visité peut reconnaître si l'authentification est associée à une session existante ;
le fait de maintenir (2-9, 3-8) la session existante si l'authentification est associée à une session existante, et
le fait d'établir une nouvelle session uniquement si l'authentification n'est pas associée à une session existante.

2. Un procédé selon la revendication 1, **caractérisé en outre par**
le fait de maintenir dans le réseau domestique une information selon laquelle l'authentification est associée à une session existante, et
si l'authentification est associée à une session existante, le fait de transmettre (2-7) l'information à ce sujet depuis le réseau domestique vers le réseau visité en relation avec l'authentification.

3. Un procédé selon la revendication 1, **caractérisé en outre**
**par** le fait de stocker un identifiant dans le réseau visité et dans le matériel de l'utilisateur en relation avec la première authentification ;
le fait de transmettre (3-7) l'identifiant depuis l'équipement utilisateur vers le réseau visité pendant l'authentification suivante ;
le fait de comparer (3-8) l'identifiant reçu dans le réseau visité avec les identifiants stockés dans le réseau visité, et
le fait de reconnaître l'authentification destinée à être associée en tant qu'authentification à une session existante si l'identificateur reçu est trouvé parmi les identifiants stockés.

4. Un système de télécommunications comprenant
des stations de base (20, 20 ') basées sur un premier système ;
un réseau visité (5) et un réseau domestique (4) basé sur un second système ;
un équipement utilisateur (1) qui peut communiquer avec le réseau domestique via la station de base le desservant et le réseau visité ;
système dans lequel l'équipement utilisateur (1) est authentifié de façon transparente au réseau domestique (4) via le réseau visité (5), et dans lequel, en réponse à une authentification réussie, une session est établie entre le réseau visité et le réseau domestique,
**caractérisé en ce que**
le réseau visité (5) est agencé pour recevoir des informations au moyen desquelles le réseau visité peut reconnaître si l'authentification est associé à une session existante, de manière à reconnaître, au moyen de l'information reçue, l'équipement utilisateur (1) destiné à être ré-authentifié et à utiliser une session existante entre le réseau visité et le réseau domestique afin que l'équipement utilisateur puisse être ré-authentifié.

5. Un système de télécommunications selon la revendication 4, **caractérisé en ce que**
le premier système est un système WLAN dont les stations de base (20, 20') comprennent également un contrôle d'accès ; et
le deuxième système est un système de communication mobile.

6. Un système de télécommunications selon les revendications 4 ou 5,
**caractérisé en ce que**
en liaison avec la ré-authentification, le réseau domestique (4) est agencé pour transmettre au réseau visité (5) une information selon laquelle une session a déjà été établie entre le réseau visité et le réseau domestique pour l'équipement utilisateur (1) associé à l'authentification et
le réseau visité (5) est agencé pour reconnaître l'équipement utilisateur (1) destiné à être ré-authentifié en réponse à l'information transmise par le réseau domestique.

7. Un système de télécommunications selon la revendication 4 ou 5, **caractérisé en ce que**, lors de l'authentification de l'équipement utilisateur (1), le réseau visité (5) est agencé pour stocker l'identifiant temporaire transmis par le réseau domestique (4) à l'équipement utilisateur (1) dans sa mémoire, pour comparer l'identifiant temporaire émis par l'équipement utilisateur au réseau domestique avec les identifiants dans la mémoire, et pour reconnaître l'équipement utilisateur comme étant l'équipement utilisateur devant être ré-authentifié si l'identifiant temporaire transmis par l'équipement utilisateur est dans la mémoire.

8. Un système de télécommunications selon la revendication 7, **caractérisé en ce que** le système (100) utilise les protocoles Radius et Diameter dans l'authentification, et **en ce que** l'identifiant est un identifiant temporaire destiné à être transmis dans des messages selon les protocoles Radius et Diameter.
